# EUROPÄISCHE PATENTSCHRIFT

(11) **EP 1 867 605 B1**
(45) Veröffentlichungstag und Bekanntmachung des Hinweises auf die Patenterteilung: **04.04.2018**
(21) Anmeldenummer: 07011689.2
(22) Anmeldetag: 14.06.2007
(51) Int. Cl.: C01F 5/08, C01F 5/14, C01F 5/22, B82Y 30/00

(54) **VERFAHREN ZUR HERSTELLUNG VON MG(OH)2-NANOPARTIKELN**
METHOD FOR MANUFACTURING MG(OH)2 NANOPARTICLES
PROCÉDÉ DE FABRICATION DE NANOPARTICULES DE MG(OH)2

(30) Priorität: 17.06.2006 DE 102006027915
(43) Veröffentlichungstag der Anmeldung: 19.12.2007
(73) Patentinhaber: K+S Aktiengesellschaft, 34111 Kassel (DE)
(72) Erfinder: Feldmann, Claus, Dr. Prof., 76275 Ettlingen (DE); Ahlert, Sascha, Dr., 44139 Dortmund (DE); Sachse, Jörg-Heino, Dr., 34119 Kassel (DE); Stahl, Ingo, Dr. Prof., 34246 Vellmar (DE)
(74) Vertreter: Kröncke, Rolf

(56) Entgegenhaltungen:
- EP-A- 1 591 421
- WO-A-03/082742
- US-A1- 2003 067 269
- C. FELDMANN, S. MATSCHULO, S. AHLERT: "Polyol-mediated synthesis of nanoscale Mg(OH)2 and MgO" JOURNAL OF MATERIALS SCIENCE, Bd. 42, Nr. 17, September 2007 (2007-09), Seiten 7076-7080, XP002453232 Springer, Netherlands
- DING Y ET AL: "NANOSCALE MAGNESIUM HYDROXIDE AND MAGNESIUM OXIDE POWDERS: CONTROL OVER SIZE, SHAPE, AND STRUCTURE VIA HYDROTHERMAL SYNTHESIS" CHEMISTRY OF MATERIALS, AMERICAN CHEMICAL SOCIETY, WASHINGTON, US, Bd. 13, Nr. 2, 1. Februar 2001 (2001-02-01), Seiten 435-440, XP001005173 ISSN: 0897-4756
- LV J ET AL: "Controlled growth of three morphological structures of magnesium hydroxide nanoparticles by wet precipitation method" JOURNAL OF CRYSTAL GROWTH, ELSEVIER, AMSTERDAM, NL, Bd. 267, Nr. 3-4, 1. Juli 2004 (2004-07-01), Seiten 676-684, XP004519684 ISSN: 0022-0248

## Beschreibung

Das Verfahren betrifft die Herstellung von Mg(OH)₂-Nanopartikeln, das heißt Partikeln mit einem Durchmesser ≤ 100 nm. Diese Mg(OH)₂-Nanopartikel können durch Calcinieren in MgO-Nanopartikel umgewandelt werden.

Mg(OH)₂- bzw. MgO-Nanopartikel finden zunehmende Bedeutung in technischen Anwendungen, wie zum Beispiel als Katalysatormaterial, bei der Modifizierung beziehungsweise Veredlung von Materialoberflächen, wie zum Beispiel zur Oberflächenhärtung oder UV-Stabilisierung. Nanoskalige Mg(OH)₂ und MgO-Partikel werden außerdem bei der Modifizierung von Kunststoffen/Polymeren im Flammschutz eingesetzt. Ein weiteres Einsatzgebiet betrifft funktionalisierte Elektroden und so genannte Hopping-Prozesse.

Zur Herstellung von nanoskaligen Partikeln und speziell von MgO- bzw. Mg(OH)₂-Partikeln sind mehrere Verfahren bekannt.

Ein gängiges Verfahren stellt die Nassmahlung von MgO bzw. Mg(OH)₂ dar. Nachteile dieses Verfahrens sind ein ineffizienter Energieeintrag sowie eine breite Partikelgrößenverteilung. Ein weiterer Nachteil liegt darin, dass die synthetisierten Nanopartikel durch Zugabe eines Additivs gegen Reagglomeration stabilisiert werden müssen.

Die Synthese von MgO- bzw. Mg(OH)₂-Nanopartikeln basiert bisher im Wesentlichen auf Gasphasenmethoden. In DE 101 09 892 A1 wird ausgehend von MgCl₂ ein Pyrolyseverfahren zur Herstellung von nanoskaligem MgO mit monomodaler Partikelgrößenverteilung beschrieben. Da Gasphasenmethoden die Bildung nicht abgesättigter beziehungsweise ungeschützter Festkörperoberflächen zur Folge haben, ist grundsätzlich von einer Agglomeration der MgO-Partikel nach deren Synthese auszugehen.

DE 102 54 567 A1 offenbart ein Herstellungsverfahren für ZSO₄-Nanopartkel (Z = Mg, Ca, Sr oder Ba bzw. binäre Mischungen derselben) in koordinierenden Lösungsmitteln wie zum Beispiel Ethylenglykol oder andere Polyethylenglykole. Die nach diesem Verfahren synthetisierten Nanopartikel haben einen Durchmesser von 0,5 nm bis 50 nm und zeichnen sich durch eine schmale Partikelgrößenverteilung aus.

Dieses Herstellungsverfahren lässt sich aufgrund der hohen Basizität von Mg(OH)₂ beziehungsweise MgO ([OH⁻] > 10⁻⁴ mol l⁻¹) nicht auf die Herstellung von Mg(OH)₂- bzw. MgO-Nanopartikeln übertragen. Infolge der hohen Konzentration an Hydroxidionen [OH⁻] ist eine Zersetzung/Polymerisation der Polyolkomponente zu erwarten, was eine gezielte Synthese von Nanopartikeln unterbindet.

Aufgabe der vorliegenden Erfindung ist es daher Mg(OH)₂- und MgO-Nanopartikel herzustellen, welche bei einem gezielt hergestellten mittleren Partikelgrößendurchmesser ≤ 100 nm eine enge Korngrößenverteilung aufweisen. Darüber hinaus sollen diese Partikel in nicht agglomerierter Form vorliegen und sich leicht in anderen Lösungsmitteln redispergieren lassen.

Die Aufgabe der vorliegenden Erfindung wurde durch das Verfahren zur Herstellung von Mg(OH)₂-Nanopartikeln gemäß Anspruch 1 gelöst.

Es wurde gefunden, dass man nanoskalige Mg(OH)₂-Partikel auf synthetischem Wege durch Fällung aus einer wässrigen MgCl₂-, Mg(NO₃)₂- oder Mg(CH₃COO)₂-Lösung mit einer Base wie z. B. NaOH bei relativ hohen OH⁻-Konzentrationen unter Anwesenheit von Polyolen herstellen kann, ohne dass es zu einer Zersetzung der Polyolkomponente kommt.

In einer bevorzugten Ausführungsform der Erfindung werden zunächst zwei Lösungen hergestellt, von denen die eine (Lösung 1) aus dem Mg-Precursor besteht, der in dem ausgewählten Polyol aufgelöst ist und die andere Lösung (Lösung 2) eine alkalisch reagierende Komponente darstellt, die ebenfalls im ausgewählten Polyol gelöst ist.

Als Mg-Precursor kann MgCl₂ oder Mg(NO₃)₂ oder Mg(CH₃COO)₂ oder deren Hydrate oder wässrige Lösungen dieser Salze eingesetzt werden. Vorzugsweise wird MgCl₂ x 6H₂O oder eine 1%-ige bis 40%-ige wässrige MgCl₂-Lösung verwendet.

Bei Verwendung eines wässrigen Mg-Precursors ist nach Zugabe des Polyols das überschüssige Wasser entweder in Lösung 1 oder in der Mischung von Lösung 1 mit Lösung 2 durch ein geeignetes Verfahren abzutrennen.

Der Polyolanteil in Lösung 1 soll zwischen 90 Gew.-% und 99 Gew.-% betragen. Die Base in Lösung 2 dient als Fällungsmittel und wird aus der Gruppe NaOH, KOH, LiOH oder quaternäres Ammoniumhydroxid (NR₄OH mit R = CH₃, C₂H₅, C₃H₇, C₄H₉) oder Metallalkoholate ausgewählt. Vorzugsweise wird NaOH oder KOH verwendet. Besonders bevorzugt wird NaOH eingesetzt.

Als Polyol in Lösung 1 und Lösung 2 kommt vorzugsweise Ethylenglykol, Diethylenglykol, Glycerin, Propandiol oder Butandiol zum Einsatz. Es können aber auch Gemische aus zwei oder mehreren dieser Polyole eingesetzt werden. Besonders bevorzugt wird Diethylenglykol verwendet.

Der Polyolanteil in Lösung 2 soll zwischen 60 Gew.-% und 90 Gew.-% betragen.

Alternativ kann, wie in den Ausführungsbeispielen 10 und 12 beschrieben, der Polyolanteil 0 Gew.-% betragen.

Nach Herstellung der beschriebenen Lösungen 1 und 2 werden diese vereint, wobei das Durchmischen durch starkes Rühren unterstützt wird. Das Mischungsverhältnis der Lösungen 1 und 2 liegt dabei im Bereich von 1:1 bis 1:1,5.

Es folgt ein ein- oder mehrstufiges Erhitzen der entstandenen Mischung auf eine Temperatur zwischen 30°C und 300°C. Es hat sich herausgestellt, dass es vorteilhaft ist, die Fällung des Mg(OH)₂ zunächst bei Temperaturen von 30°C bis 80°C zu initiieren und in einem weiteren Schritt die Temperatur der Mischung auf 50°C bis 300°C zu erhöhen. Dabei soll die Temperatur in der Initialphase (Schritt 1) über eine Dauer von 5 min bis 60 min gehalten werden. Nach dem weiteren Erhitzen auf die Endtemperatur soll diese über eine Dauer von 10 min bis 30 min gehalten werden.

Für die zweite Stufe des Erhitzens kann das Gemisch auch in einen Autoklaven gegeben werden.

Durch die beschriebene Verfahrensweise entsteht eine Suspension von nanoskaligem Mg(OH)₂, welche anschließend auf Umgebungstemperatur abgekühlt wird. Mittels eines geeigneten Fest/Flüssigtrennverfahrens wird der nanoskalige Mg(OH)₂-Feststoff abgetrennt. Ein geeignetes Verfahren stellt die Zentrifugation dar. Nach der Abtrennung liegt ein feuchtes nanoskaliges Mg(OH)₂-Produkt vor. Durch einen ein- oder mehrstufigen Prozess kann dieses Produkt weiter gereinigt werden sowie anhaftendes Polyol entfernt werden. Dies geschieht in der Regel durch Resuspendierung des feuchten Produktes in polaren Lösungsmitteln wie Wasser, Ethanol, Isopropanol oder Aceton beziehungsweise einer Mischung aus zwei oder mehreren dieser Lösungsmittel und anschließende Zentrifugation.

Das Polyol kann aber ebenso durch Erhitzen an Luft verdampft werden. Erfindungsgemäß bleibt die Oberfläche der Nanopartikel auch nach einer Erwärmung mit dem jeweils verwendeten Polyol bedeckt, solange man bei Temperaturen kleiner 250°C trocknet. Vorzugsweise wird bei Temperaturen von 40°C bis 100°C getrocknet, besonders bevorzugt bei 50° C bis 80° C.

Nach dem vorgenannt beschriebenen Verfahren können nanoskalige Mg(OH)₂-Partikel hergestellt werden, die durch Calcinieren in MgO-Nanopartikel umgewandelt werden können. Die Calcination wird bei Temperaturen zwischen 250°C und 500°C durchgeführt, besonders bevorzugt bei 270° C bis 350° C.

Der Gegenstand der vorliegenden Erfindung sind auch MgO-Partikeln nach Anspruch 20.

Die nach dem erfindungsgemäßen Verfahren hergestellten Mg(OH)₂- und/oder MgO-Partikel liegen in amorpher bzw. kristalliner Form vor und sind durch folgende Eigenschaften gekennzeichnet:
- die Partikeldurchmesser liegen im Bereich von 10 nm bis 300 nm, besonders bevorzugt bei 20 nm bis 150 nm bei einer monodispersen Partikelgrößenverteilung, deren Abweichung vom Mittelwert < ± 20 % beträgt, besonders bevorzugt bei <± 5 %.
- Der Partikeldurchmesser der nach dem erfindungsgemäßen Verfahren hergestellten Nanopartikel kann durch eine Variation der Temperatur nach Zugabe von Lösung 2 zu Lösung 1 beeinflusst werden. Dabei wird bei einer tieferen Temperatur die Bildung kleinerer Partikel begünstigt. Eine Begünstigung der Bildung kleinerer Partikel ist in einer weiteren Ausführung des erfindungsgemäßen Verfahrens auch möglich, indem das Mischungsverhältnis von Lösung1/Lösung 2 dahingehend variiert wird, dass ein geringerer Anteil an Lösung 2 zur Bildung kleinerer Partikel führt.
- die Partikel besitzen einen sphärischen Habitus und liegen in nicht agglomerierter Form vor, wobei die Partikeloberfläche vom jeweils verwendeten Polyol bedeckt ist.

Das erfindungsgemäße nanoskalige Mg(OH)₂ oder MgO kann sowohl als trockenes Pulver als auch in Form einer Suspension mit 0,1 Gew.-% bis 50 Gew.-% Feststoffanteil in einem mehrwertigen Alkohol, zum Beispiel Glykol, Diethylenglykol, Glycerin, Propandiol oder Butandiol verwendet werden. Besonders bevorzugt sind Suspensionen mit 1 Gew.-% bis 20 Gew.-% Feststoffanteil.

Das Verfahren wird nachfolgend anhand von Ausführungsbeispielen näher erläutert.

### Ausführungsbeispiel 1:

Unter Stickstoff werden 0,50 g MgCl₂ x 6H₂O in 25 ml Diethylenglykol gelöst (Lösung 1). 1,50 g NaOH werden in 3 ml Wasser gelöst und nachfolgend 25 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 240°C erhöht und wiederum 10 min gehalten. Nach dem Abkühlen liegt eine Suspension mit 0,15 g Mg(OH)₂ in 50 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 2:

Unter Stickstoff werden 2,50 g MgCl₂ x 6H₂O in 50 ml Diethylenglykol gelöst (Lösung 1). 7,50 g NaOH werden in 6 ml Wasser gelöst und nachfolgend 50 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 240°C erhöht und wiederum 10 min gehalten. Nach dem Abkühlen liegt eine Suspension mit 0,72 g Mg(OH)₂ in 100 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,72 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol oder Butandiol, Wasser) erfolgen. Das Redispergieren kann durch Rühren und/oder Ultraschalleinwirkung unterstützt werden.

### Ausführungsbeispiel 3:

Unter Stickstoff werden 0,48 g Mg(NO₃)₂ x 6H₂O in 25 ml Diethylenglykol gelöst (Lösung 1). 1,50 g NaOH werden in 3 ml Wasser gelöst und nachfolgend 25 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 240°C erhöht und wiederum 10 min gehalten. Nach dem Abkühlen liegt eine Suspension mit 0,15 g Mg(OH)₂ in 50 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 4:

Unter Stickstoff werden 0,53 g Mg(CH₃COO)₂ x 4H₂O in 25 ml Diethylenglykol gelöst (Lösung 1). 1,50 g NaOH werden in 3 ml Wasser gelöst und nachfolgend 25 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 240°C erhöht und wiederum 10 min gehalten. Nach dem Abkühlen liegt eine Suspension mit 0,15 g Mg(OH)₂in 50 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 5:

Unter Stickstoff werden 0,55 ml einer 30%-igen wässrigen MgCl₂-Lösung mit 25 ml Diethylenglykol gemischt (Lösung 1). 1,50 g NaOH werden in 3 ml Wasser gelöst und nachfolgend 25 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 240°C erhöht und wiederum 10 min gehalten. Nach dem Abkühlen liegt eine Suspension mit 0,15 g Mg(OH)₂ in 50 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 6:

Unter Stickstoff werden 0,50 g MgCl₂ x 6H₂O in 25 ml Butandiol gelöst (Lösung 1). 1,50 g NaOH werden in 3 ml Wasser gelöst und nachfolgend 25 ml Butandiol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 220°C erhöht und wiederum 10 min gehalten. Nach dem Abkühlen liegt eine Suspension mit 0,15 g Mg(OH)₂ in 50 ml Butandiol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Butandiol bedeckt. Basierend auf dieser Oberflächenmodifikation kann eine leichte Redispersion des Feststoffs in anderen Lösungsmitteln (zum Beispiel Methanol, Ethanol, Isopropanol, Butanol oder Wasser) erfolgen. Das Redispergieren kann durch Rühren und/oder Ultraschalleinwirkung unterstützt werden.

### Ausführungsbeispiel 7:

Unter Stickstoff werden 0,50 g MgCl₂ x 6H₂O in 25 ml Ethylenglykol gelöst (Lösung 1). 1,50 g NaOH werden in 3 ml Wasser gelöst und nachfolgend 25 ml Ethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 190°C erhöht und wiederum 10 min gehalten. Nach dem Abkühlen liegt eine Suspension mit 0,15 g Mg(OH)₂ in 50 ml Ethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Ethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen.

Das Redispergieren kann durch Rühren und/oder Ultraschalleinwirkung unterstützt werden.

### Ausführungsbeispiel 8:

Unter Stickstoff werden 0,50 g MgCl₂ x 6H₂O in 25 ml eines Gemisches, bestehend aus 50% Diethylenglykol und 50% Propandiol gelöst (Lösung 1). 1,50 g NaOH werden in 3 ml Wasser gelöst und nachfolgend 25 ml eines Gemisches, bestehend aus 50% Diethylenglykol und 50% Propandiol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 200°C erhöht und wiederum 10 min gehalten. Nach dem Abkühlen liegt eine Suspension mit 0,15 g Mg(OH)₂ in 50 ml Diethylenglykol/Propandiol-Gemisch vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bzw. Propandiol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 9:

Unter Stickstoff werden 0,50 g MgCl₂ x 6H₂O in 25 ml Diethylenglykol gelöst (Lösung 1). 2,1 g KOH werden in 3 ml Wasser gelöst und nachfolgend 25 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird die Temperatur unter Destillationsbedingungen auf 240°C erhöht und wiederum 10 min gehalten. Nach dem Abkühlen liegt eine Suspension mit 0,15 g Mg(OH)₂ in 50 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 10:

Unter Stickstoff werden 0,50 g MgCl₂ x 6H₂O in 30 ml Diethylenglykol gelöst und auf 80°C erhitzt (Lösung 1). 0,25 g NaOH werden in 5 ml Wasser gelöst und unter starkem Rühren zu Lösung 1 gegeben. Die Temperatur wird weitere 10 min bei 80°C gehalten. Nach dem Abkühlen liegt eine Suspension mit 0,15 g Mg(OH)₂ in 30 ml Diethylenglykol vor. Die Suspension ist kolloidal stabil und enthält agglomeratfreie, sphärische Partikel mit einem Durchmesser von etwa 20 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 11:

Unter Stickstoff werden 0,50 g MgCl₂ x 6H₂O in 25 ml Diethylenglykol gelöst (Lösung 1). 1,50 g NaOH werden in 3 ml Wasser gelöst und nachfolgend 25 ml Diethylenglykol zugegeben (Lösung 2). Lösung 2 wird auf 50°C erhitzt und Lösung 1 unter starkem Rühren zugegeben. Die Temperatur wird weitere 30 min bei 50°C gehalten. Nachfolgend wird das Gemisch im Autoklaven auf 300°C erhitzt und 10 min bei dieser Temperatur gehalten. Nach dem Abkühlen liegt eine Suspension mit 0,15 g Mg(OH)₂ in 50 ml Diethylenglykol vor. Die Suspension ist kolloidal stabil und enthält agglomeratfreie, sphärische Partikel mit einem Durchmesser von etwa 100 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

### Ausführungsbeispiel 12:

Unter Stickstoff werden 0,50 g MgCl₂ x 6H₂O in 30 ml Diethylenglykol gelöst und auf 80°C erhitzt (Lösung 1). 0,25 g NaOH werden in 5 ml Wasser gelöst und unter starkem Rühren zu Lösung 1 gegeben. Die Temperatur wird weitere 10 min bei 80°C gehalten. Nachfolgend wird das Gemisch im Autoklaven auf 300°C erhitzt und 10 min bei dieser Temperatur gehalten. Nach dem Abkühlen liegt eine Suspension mit 0,15 g Mg(OH)₂ in 30 ml Diethylenglykol vor. Die Suspension ist kolloidal stabil und enthält agglomeratfreie, sphärische Partikel mit einem Durchmesser von etwa 20 nm. Durch Zentrifugation kann die Suspension auf einen Feststoffgehalt von bis zu 0,15 g Mg(OH)₂ in 5 ml aufkonzentriert werden. Durch Abzentrifugieren gefolgt von geeigneten Waschprozessen (zum Beispiel wiederholtes Resuspendieren und Abzentrifugieren der Partikel aus Ethanol, Isopropanol, Aceton oder Wasser) kann der nanoskalige Feststoff abgetrennt werden. Die Partikeloberflächen sind auch im trockenen Pulver mit Diethylenglykol bedeckt. Basierend auf dieser Oberflächenmodifikation kann eine leichte Redispersion des Feststoffs in anderen Lösungsmitteln (zum Beispiel Methanol, Ethanol, Isopropanol, Butanol, Butandiol oder Wasser) erfolgen. Das Redispergieren kann durch Rühren und/oder Ultraschalleinwirkung unterstützt werden.

## Patentansprüche

1. Verfahren zur Herstellung von Mg(OH)₂-Nanopartikeln durch Polyol-vermittelte Synthese aus MgCl₂ oder Mg(NO₃)₂ oder Mg(CH₃COO)₂ oder deren Hydraten oder wässrigen Lösungen dieser Salze als Mg-Precursor und Alkalimetallhydroxid ausgewählt aus der Gruppe NaOH, KOH, LiOH oder quaternäres Ammoniumhydroxid (NR₄OH mit R=CH₃, C₂H₅, C₃H₇, C₄H₉) oder Metallalkoholate unter Anwendung der nachfolgenden Verfahrensschritte:
- Lösen des Mg-Precursors im ausgewählten Polyol zur Herstellung einer Lösung 1,
- Herstellen einer Lösung 2 in Form einer wässrigen Alkalimetallhydroxid-Lösung gegebenenfalls versetzt mit Polyol oder einer wässrigen quaternären Ammoniumhydroxid-Lösung gegebenenfalls versetzt mit Polyol oder Metallalkoholate gegebenenfalls versetzt mit Polyol,
- Zugabe von Lösung 1 zu Lösung 2 und Herstellung einer Mischung,
- starkes Rühren,
- ein- oder mehrstufiges Erhitzen der entstandenen Mischung auf eine Temperatur zwischen 30°C und 300°C,
- Abkühlen der entstehenden Mg(OH)₂-Produktsuspension auf Umgebungstemperatur,
- Abtrennen des Feststoffes aus der Suspension mittels eines geeigneten Fest-/Flüssigtrennverfahrens.

2. Verfahren zur Herstellung Mg(OH)₂-Nanopartikeln durch Polyol-vermittelte Synthese aus MgCl₂ oder Mg(NO₃)₂ oder Mg(CH₃COO)₂ oder deren Hydraten oder wässrigen Lösungen dieser Salze als Mg-Precursor und Alkalimetallhydroxid ausgewählt aus der Gruppe NaOH, KOH, LiOH oder quaternäres Ammoniumhydroxid (NR₄OH mit R=CH₃, C₂H₅, C₃H₇, C₄H₉) oder Metallalkoholate nach Anspruch 1 unter Anwendung der nachfolgenden Verfahrensschritte:
- Lösen des Mg-Precursors im ausgewählten Polyol zur Herstellung einer Lösung 1,
- Herstellen einer Lösung 2 in Form einer wässrigen Alkalimetallhydroxid-Lösung versetzt mit Polyol oder einer wässrigen quaternären Ammoniumhydroxid-Lösung versetzt mit Polyol oder Metallalkoholate versetzt mit Polyol,
- Zugabe von Lösung 1 zu Lösung 2 und Herstellung einer Mischung,
- starkes Rühren,
- ein- oder mehrstufiges Erhitzen der entstandenen Mischung auf eine Temperatur zwischen 30°C und 300°C,
- Abkühlen der entstehenden Mg(OH)2-Produktsuspension auf Umgebungstemperatur,
- Abtrennen des Feststoffes aus der Suspension mittels eines geeigneten Fest-/Flüssigtrennverfahrens.

3. Verfahren nach Anspruch 1 oder 2 **dadurch gekennzeichnet, dass** als Mg-Precursor MgCl₂·6H₂O oder eine 1%-ige bis 40%-ige wässrige MgCl₂-Lösung eingesetzt wird.

4. Verfahren nach einem der Ansprüche 1 bis 3 **dadurch gekennzeichnet, dass** als Alkalimetallhydroxid NaOH oder KOH oder als quaternäres Ammoniumhydroxid N(CH₃)₄OH eingesetzt wird, besonders bevorzugt NaOH.

5. Verfahren nach einem der vorherigen Ansprüche **dadurch gekennzeichnet, dass** als Polyol vorzugsweise Ethylenglykol, Diethylenglykol, Glycerin, Propandiol oder Butandiol bzw. ein Gemisch aus zwei oder mehreren dieser Polyole eingesetzt wird, besonders bevorzugt Diethylenglykol.

6. Verfahren nach einem der vorherigen Ansprüche **dadurch gekennzeichnet, dass** der Anteil an Polyol in Lösung 1 zwischen 90 Gew.-% und 99 Gew.-% beträgt.

7. Verfahren nach einem der vorherigen Ansprüche **dadurch gekennzeichnet, dass** der Anteil an Polyol in Lösung 2 zwischen 60 Gew.-% und 90 Gew.-% beträgt.

8. Verfahren nach einem der vorherigen Ansprüche **dadurch gekennzeichnet, dass** bei Verwendung eines wässrigen Mg-Precursors nach Zugabe des Polyols das überschüssige Wasser durch ein geeignetes Verfahren abgetrennt wird.

9. Verfahren nach einem der vorherigen Ansprüche **dadurch gekennzeichnet, dass** bei Verwendung eines wässrigen Mg-Precursors in Polyol als Lösung 1 das überschüssige Wasser nach dem Mischen mit Lösung 2 durch ein geeignetes Verfahren abgetrennt werden kann.

10. Verfahren nach einem der vorherigen Ansprüche **dadurch gekennzeichnet, dass** die Lösungen 1 und 2 in einem Gewichtsverhältnis von 1:1 bis 1:1,5 gemischt werden.

11. Verfahren nach einem der vorherigen Ansprüche **dadurch gekennzeichnet, dass** die Mischung in einem ersten Schritt auf eine Temperatur von 30°C bis 80°C und in einem zweiten Schritt auf eine Temperatur von 50°C bis 300°C erhitzt wird.

12. Verfahren nach einem der vorherigen Ansprüche **dadurch gekennzeichnet, dass** die Temperatur der Mischung nach erreichen der Endtemperatur des Schrittes 1 über eine Dauer von 5 min bis 60 min gehalten wird und die Temperatur der Mischung nach Erreichen der Endtemperatur des Schrittes 2 über eine Dauer von 10 min bis 30 min gehalten wird.

13. Verfahren nach einem der vorherigen Ansprüche **dadurch gekennzeichnet, dass** die Mischung in einem Autoklaven über 10 min bis 30 min auf 50°C bis 300°C erhitzt wird.

14. Verfahren nach einem der vorherigen Ansprüche **dadurch gekennzeichnet, dass** der Feststoff aus der Suspension mittels Zentrifugation abgetrennt wird.

15. Verfahren nach einem der vorherigen Ansprüche **dadurch gekennzeichnet, dass** der abgetrennte Feststoff durch einen ein- oder mehrstufigen Prozess, durch Resuspendierung in Wasser oder Ethanol oder Isopropanol oder Aceton oder einer Mischung dieser Stoffe gewaschen und anschließend zentrifugiert wird.

16. Verfahren nach einem der vorherigen Ansprüche **dadurch gekennzeichnet, dass** der abgetrennte Feststoff bei Temperaturen von 40°C bis 100°C getrocknet wird.

17. Verfahren nach einem der vorherigen Ansprüche **dadurch gekennzeichnet, dass** die vorliegenden Mg(OH)₂-Nanopartikel mittels Calcinierung bei Temperaturen von 250°C bis 500°C in MgO-Nanopartikel umgewandelt werden.

18. Verfahren nach einem der vorherigen Ansprüche **dadurch gekennzeichnet, dass** die vorliegenden Mg(OH)₂- oder MgO-Nanopartikel in polaren Lösungsmitteln wie Wasser oder Alkoholen oder Mischungen daraus redispergiert werden.

19. Mg(OH)₂- Nanopartikel hergestellt nach einem Verfahren nach einem der Ansprüche 1 bis 16 und 18 **dadurch gekennzeichnet, dass**
- die Partikeloberfläche vom jeweils verwendeten Polyol bedeckt ist,
- die Partikel einen sphärischen Habitus aufweisen und in nicht agglomerierter Form vorliegen,
- die Partikeldurchmesser in einem Bereich von 10 nm bis 300 nm liegen und eine monodisperse Partikelgrößenverteilung aufweisen, deren Abweichung vom Mittelwert <±20% beträgt.

20. MgO-Nanopartikel hergestellt durch Calcinierung der Mg(OH)₂-Nanopartikel nach Anspruch 19 oder nach einem der Ansprüche 17 oder 18.

21. Mg(OH)₂- und/oder MgO-Nanopartikel nach Anspruch 19 oder 20 in Form einer Suspension mit einem Feststoffanteil zwischen 0,1 Gew.-% und 50 Gew.-%.

22. Verfahren nach einem der Ansprüche 1 bis 18 **dadurch gekennzeichnet, dass** eine Steuerung des Partikeldurchmessers durch eine Variation der Temperatur nach Zugabe von Lösung 2 zu Lösung 1 stattfindet, wobei eine tiefere Temperatur die Bildung kleinerer Partikel begünstigt.

23. Verfahren nach einem der Ansprüche 1 bis 18 **dadurch gekennzeichnet, dass** eine Steuerung des Partikeldurchmessers durch eine Variation des Verhältnisses Lösung 1/ Lösung 2 stattfindet, wobei ein geringerer Anteil an Lösung 2 die Bildung kleinerer Partikel begünstigt.

## Claims

1. A method for the production of Mg(OH)₂ nanoparticles by means of polyol mediated synthesis from MgCl₂ or Mg(NO₃)₂ or Mg(CH₃COO)₂ or their hydrates or aqueous solutions of these salts as Mg-precursors, and alkalimetal hydroxide selected from the group of NaOH, KOH, LiOH or quaternary ammonium hydroxide (NR₄OH with R=CH₃, C₂H₅, C₃H₇, C₄H₉) or metal alcoholates applying the following method steps:
- dissolving the Mg-precursor in a selected polyol, in order to produce a first solution,
- producing a second solution in form of an aqueous alkalimetal hydroxide solution optionally mixed with polyol or an aqueous quaternary ammonium hydroxide solution optionally mixed with polyol or a metal alcoholates optionally mixed with polyol,
- adding the first solution to the second solution to produce a mixture,
- stirring the mixture,
- heating the mixture in one stage or multi-stages to a temperature between 30°C and 300°C,
- cooling the Mg(OH)₂ product suspension formed to ambient temperature,
- separating the solid from the suspension by means of suitable solid/liquid separation methods.

2. Method for the production of Mg(OH)₂ nanoparticles by means of polyol mediated synthesis from MgCl₂ or Mg(NO₃)₂ or Mg(CH₃COO)₂ or the hydrates or aqueous solutions of these salts as MG-precursor and alkalimetal hydroxide selected from the group of NaOH, KOH, LiOH or quaternary ammonium hydroxide (NR₄OH with R=CH₃, C₂H₅, C₃H₇, C₄H₉) or metal alcoholates according to claim 1 applying the following method steps:
- dissolving the Mg-precursor in a selected polyol, in order to produce a first solution,
- producing a second solution in form of an aqueous alkalimetal hydroxide solution mixed with polyol or an aqueous quaternary ammonium hydroxide solution mixed with polyol or a metal alcoholates mixed with polyol,
- adding the first solution to the second solution to produce a mixture,
- stirring the mixture,
- heating the mixture in one stage or multi-stages to a temperature between 30°C and 300°C,
- cooling the Mg(OH)₂ product suspension formed to ambient temperature,
- separating the solid from the suspension by means of suitable solid/liquid separation methods.

3. The method according to claim 1 or 2, **characterized in that** the MG-precursor MgCl₂ x 6H₂O or a 1% to 40% aqueous MgCl₂ solution is used as the Mg-precursor.

4. The method according to any one of claims 1 to 3, **characterized in that** the alkalimetal hydroxide is NaOH or KOH or the quaternary ammonium hydroxide N(CH₃)₄OH is used, preferably, NaOH.

5. The method according to any one of the preceding claims, **characterized in that** the polyol used is preferably ethylene glycol, diethylene glycol, glycerin, propandiol or butandiol or a mixture of these polyols, in particular diethylene glycol.

6. The method according to any one of the preceding claims, **characterized in that** the proportion of polyol in the first solution amounts to 90 wt.-% and 99 wt.-%.

7. The method according to any one of the preceding claims wherein the proportion of polyol in the second solution amounts to between 60 wt.-% and 90 wt.-%.

8. The method according to claim 1, **characterized in that** wherein the method uses an aqueous Mg-precursor, and wherein excess water is removed after the addition of the polyol.

9. The method according to any one of the preceding claims, **characterized in that** when using the aqueous Mg-precursor and polyol as the first solution the excess water is removed after mixing with the second solution by suitable methods.

10. The method according to any one of the preceding claims, **characterized in that** the first and the second solution are mixed in a weight ratio of from 1:1 to 1:1,5.

11. The method according to any one of the preceding claims, **characterized in that** the mixture is heated to a temperature of 30°C to 80°C and then in a second step of heating the mixture is heated to a temperature of 50°C to 300°C.

12. The method according to any one of the preceding claims, wherein after an end temperature of step 1 has been reached, the temperature of the mixture is held over a period of 5 minutes to 60 minutes, and after an end temperature of step 2 has been reached, the temperature of the mixture is held over a period of 10 minutes to 30 minutes.

13. The method according to any one of the preceding claims, **characterized in that** the mixture is heated in an autoclave to 50°C to 300°C over a period of 10 minutes to 30 minutes.

14. The method according to any one of the preceding claims wherein the solid is removed from the suspension by means of centrifugation.

15. The method according to any one of the preceding claims, **characterized in that** the separated solid is washed and subsequently centrifuged by means of a one stage or multi stage process, by means of re-suspension in water or ethanol or isopropanol or acetone or a mixture of these substances.

16. The method according to any of the preceding claims, **characterized in that** the separated solid is dried at a temperature of from 40°C to 100°C.

17. The method according to any one of the preceding claims, **characterized in that** the MgOH₂ nanoparticles are converted into MgO nanoparticles by means of calcination at temperatures of 250°C to 500°C.

18. The method according to any one of the preceding claims, **characterized in that** the MgOH₂ or MgO nanoparticles are re-dispersed in polar solvents such as water or alcohol or mixtures thereof.

19. MgOH₂ nanoparticles obtainable by a method according to any one of claims 1 to 16 and 18 **characterized in that**
- the particle surface is covered by the polyol used,
- the particles have a spherical habitus and are present in non-agglomerated form,
- the particle diameter is in a range of from 10 nm to 300 nm and having a mono-dispersed particle size distribution whereby the deviation from the average from the mean value is <±20%.

20. MgO nanoparticles obtainable by calcinating the Mg(OH)₂ nanoparticles according to claim 19 or according to any one of claims 17 or 18.

21. Mg(OH)₂ and/or MgO nanoparticles according to claim 19 or 20 in form of a suspension having a solid content of 0.1 wt.-% to 50 wt.-%.

22. A method according to any one of claims 1 to 18 **characterized in that** the particle diameter is controlled by varying the temperature after the addition of a second solution to the first solution wherein a lower temperature promotes the formation of smaller particles.

23. A method according to any one of claim 1 to 18 **characterized in that** the particle diameter is controlled by varying the ratio of the first solution to the second solution and wherein a lower proportion of the second solution promotes the formation of smaller particles.

## Revendications

1. Procédé de fabrication de nanoparticules de Mg(OH)₂ par synthèse médiée par un polyol à partir de MgCl₂ ou de Mg(NO₃)₂ ou de Mg(CH₃COO)₂ ou leurs hydrates ou de solutions aqueuses de ces sels en tant que précurseur de Mg et d'un hydroxyde de métal alcalin choisi dans le groupe constitué par NaOH, KOH, LiOH ou un hydroxyde d'ammonium quaternaire (NR₄OH avec R = CH₃, C₂H₅, C₃H₇, C₄H₉) ou d'alcoolates métalliques en utilisant les étapes de procédé suivantes :
- la dissolution du précurseur de Mg dans le polyol choisi pour la fabrication d'une solution 1,
- la préparation d'une solution 2 sous la forme d'une solution aqueuse d'hydroxyde de métal alcalin éventuellement mélangée avec un polyol ou d'une solution aqueuse d'hydroxyde d'ammonium quaternaire éventuellement mélangée avec un polyol ou d'alcoolates métalliques éventuellement mélangés avec un polyol,
- l'ajout de la solution 1 à la solution 2 et la préparation d'un mélange,
- l'agitation forte,
- le chauffage en une ou plusieurs étapes du mélange formé à une température comprise entre 30 °C et 300 °C,
- le refroidissement de la suspension de produit de Mg(OH)₂ formée à température ambiante,
- la séparation des solides de la suspension au moyen d'un procédé de séparation solide/liquide approprié.

2. Procédé de fabrication de nanoparticules de Mg(OH)₂ par synthèse médiée par un polyol à partir de MgCl₂ ou de Mg(NO₃)₂ ou de Mg(CH₃COO)₂ ou leurs hydrates ou de solutions aqueuses de ces sels en tant que précurseur de Mg et d'un hydroxyde de métal alcalin choisi dans le groupe constitué par NaOH, KOH, LiOH ou un hydroxyde d'ammonium quaternaire (NR₄OH avec R = CH₃, C₂H₅, C₃H₇, C₄H₉) ou d'alcoolates métalliques selon la revendication 1 en utilisant les étapes de procédé suivantes :
- la dissolution du précurseur de Mg dans le polyol choisi pour la fabrication d'une solution 1,
- la préparation d'une solution 2 sous la forme d'une solution aqueuse d'hydroxyde de métal alcalin mélangée avec un polyol ou d'une solution aqueuse d'hydroxyde d'ammonium quaternaire mélangée avec un polyol ou d'alcoolates métalliques mélangés avec un polyol,
- l'ajout de la solution 1 à la solution 2 et la préparation d'un mélange,
- l'agitation forte,
- le chauffage en une ou plusieurs étapes du mélange formé à une température comprise entre 30 °C et 300 °C,
- le refroidissement de la suspension de produit de Mg(OH)₂ formée à température ambiante,
- la séparation des solides de la suspension au moyen d'un procédé de séparation solide/liquide approprié.

3. Procédé selon la revendication 1 ou 2, **caractérisé en ce qu'**en tant que précurseur de Mg, MgCl₂·6H₂O ou une solution aqueuse de 1 % à 40 % de MgCl₂ est utilisée.

4. Procédé selon l'une quelconque des revendications 1 à 3, **caractérisé en ce que** NaOH ou KOH est utilisé en tant qu'hydroxyde de métal alcalin ou N(CH₃)₄OH est utilisé en tant qu'hydroxyde d'ammonium quaternaire, de manière particulièrement préférée NaOH.

5. Procédé selon l'une quelconque des revendications précédentes, **caractérisé en ce que** de l'éthylène glycol, du diéthylène glycol, de la glycérine, du propane-diol ou du butane-diol ou un mélange de deux ou plus de ces polyols est utilisé de préférence en tant que polyol, de manière particulièrement préférée le diéthylène glycol.

6. Procédé selon l'une quelconque des revendications précédentes, **caractérisé en ce que** la proportion de polyol dans la solution 1 est comprise entre 90 % en poids et 99 % en poids.

7. Procédé selon l'une quelconque des revendications précédentes, **caractérisé en ce que** la proportion de polyol dans la solution 2 est comprise entre 60 % en poids et 90 % en poids.

8. Procédé selon l'une quelconque des revendications précédentes, **caractérisé en ce que** lors de l'utilisation d'un précurseur de Mg aqueux, l'eau en excès est séparée par un procédé approprié après l'ajout du polyol.

9. Procédé selon l'une quelconque des revendications précédentes, **caractérisé en ce que** lors de l'utilisation d'un précurseur de Mg aqueux dans un polyol en tant que solution 1, l'eau peut être séparée après le mélange avec la solution 2 par un procédé approprié.

10. Procédé selon l'une quelconque des revendications précédentes, **caractérisé en ce que** les solutions 1 et 2 sont mélangées en un rapport en poids de 1:1 à 1:1,5.

11. Procédé selon l'une quelconque des revendications précédentes, **caractérisé en ce que** le mélange est porté lors d'une première étape à une température de 30 °C à 80 °C et lors d'une deuxième étape à une température de 50 °C à 300 °C.

12. Procédé selon l'une quelconque des revendications précédentes, **caractérisé en ce que** la température du mélange après avoir atteint la température finale de l'étape 1 est maintenue pendant une durée de 5 minutes à 60 minutes, et la température du mélange après avoir atteint la température finale de l'étape 2 est maintenue pendant une durée de 10 minutes à 30 minutes.

13. Procédé selon l'une quelconque des revendications précédentes, **caractérisé en ce que** le mélange est porté à une température de 50 °C à 300 °C pendant 10 minutes à 30 minutes dans un autoclave.

14. Procédé selon l'une quelconque des revendications précédentes, **caractérisé en ce que** les solides sont séparés de la suspension par centrifugation.

15. Procédé selon l'une quelconque des revendications précédentes, **caractérisé en ce que** les solides séparés sont lavés par un procédé à une ou plusieurs étapes, par resuspension dans de l'eau ou de l'éthanol ou de l'isopropanol ou de l'acétone ou un mélange de ces substances, puis centrifugés.

16. Procédé selon l'une quelconque des revendications précédentes, **caractérisé en ce que** les solides séparés sont séchés à des températures de 40 °C à 100 °C.

17. Procédé selon l'une quelconque des revendications précédentes, **caractérisé en ce que** les nanoparticules de Mg(OH)₂ présentes sont transformées par calcination à des températures de 250 °C à 500 °C en nanoparticules de MgO.

18. Procédé selon l'une quelconque des revendications précédentes, **caractérisé en ce que** les nanoparticules de Mg(OH)₂ ou de MgO présentes sont redispersées dans des solvants polaires tels que de l'eau ou des alcools ou leurs mélanges.

19. Nanoparticules de Mg(OH)₂ fabriquées par un procédé selon l'une quelconque des revendications 1 à 16 et 18, **caractérisées en ce que**
- la surface des particules est recouverte par le polyol respectivement utilisé,
- les particules présentent une conformation sphérique et se présentent sous forme non agglomérée,
- les diamètres des particules se situent dans une plage allant de 10 nm à 300 nm et présentent une distribution des tailles de particules monodispersée, dont la déviation de la valeur moyenne est < ±20 %.

20. Nanoparticules de MgO préparées par calcination des nanoparticules de Mg(OH)₂ selon la revendication 19 ou selon l'une quelconque des revendications 17 ou 18.

21. Nanoparticules de Mg(OH)₂ et/ou de MgO selon la revendication 19 ou 20 sous la forme d'une suspension ayant une teneur en solides comprise entre 0,1 % en poids et 50 % en poids.

22. Procédé selon l'une quelconque des revendications 1 à 18, **caractérisé en ce qu'**un ajustement du diamètre des particules a lieu par une variation de la température après l'ajout de la solution 2 à la solution 1, une température plus basse favorisant la formation de particules plus petites.

23. Procédé selon l'une quelconque des revendications 1 à 18, **caractérisé en ce qu'**un ajustement du diamètre des particules a lieu par une variation du rapport solution 1/solution 2, une proportion plus faible de solution 2 favorisant la formation de particules plus petites.
